# EUROPEAN PATENT SPECIFICATION

(11) **EP 1 243 444 B1**
(45) Date of publication and mention of the grant of the patent: **17.10.2007**
(21) Application number: 01951928.9
(22) Date of filing: 19.07.2001
(51) Int. Cl.: B60B 3/00, B60B 23/00, F16F 15/32, B60B 35/10, G01M 1/32

(54) **ASSEMBLING METHOD FOR TIRE WHEEL ASSEMBLY AND ASSEMBLING LINE FOR TIRE WHEEL ASSEMBLY, AND WHEEL AND PRODUCTION METHOD FOR WHEEL**
ZUSAMMENBAUVERFAHREN FÜR EINE REIFENRADVORRICHTUNG UND DAZUGEHÖRENDEMONTAGESTRASSE, RAD UND DESSEN HERSTELLUNGSVERFAHREN
PROCEDE ET LIGNE D'ASSEMBLAGE POUR ENSEMBLE ROUE-PNEU, TYPE DE ROUE ET PROCEDE DE PRODUCTION CORRESPONDANT

(30) Priority: 31.10.2000 JP 2000331889; 01.12.2000 JP 2000366571; 01.12.2000 JP 2000366636; 01.12.2000 JP 2000366572; 01.12.2000 JP 2000366445; 21.12.2000 JP 2000388041
(43) Date of publication of application: 25.09.2002
(73) Proprietor: HONDA GIKEN KOGYO KABUSHIKI KAISHA, Minato-ku, Tokyo 107-8556 (JP)
(72) Inventor: WATANABE, Shinichi, Wako-shi, Saitama 351-0193 (JP); TAKAGI, Hisamitsu, Wako-shi, Saitama 351-0193 (JP); KASHIWAI, Mikio, Wako-shi, Saitama 351-0193 (JP); SATO, Shiro, Wako-shi, Saitama 351-0193 (JP); ICHINOSE, Hidemi, Wako-shi, Saitama 351-0193 (JP)
(74) Representative: Prechtel, Jörg
(86) International application number: PCT/JP2001/006266
(87) International publication number: WO 2002/036366

(56) References cited:
- GB-A- 2 104 460
- GB-A- 2 270 887
- JP-A- 1 095 903
- JP-A- 11 258 096
- JP-A- 11 287 728
- JP-U- 3 005 601
- JP-U- 3 009 902
- JP-U- 51 092 802
- JP-U- 58 149 202
- US-A- 1 860 216
- US-A- 4 302 966
- US-A- 4 858 667
- US-A- 5 211 782

## Description

### 1.Field of the Art

This invention concerns a tire/wheel assembly assembling method according to the preamble portion of claim 1.

### 2.Background Art

A method of the generic kind is known from document US-A-4,302,966. This document describes a method of mounting a tire on a wheel by putting the unbalance of the tire opposite the unbalance of the wheel to minimize a balancing weight.

A tire/wheel assembly (car wheel) used in an automobile or other vehicle is comprised of a wheel and a tire, which is assembled onto the wheel. The wheel has an annular rim, onto which the tire is assembled, and a disk, which is welded to the rim and to which the hub of the shaft of a vehicle is fixed by means of bolts, etc.

Such wheels and tires are non-uniform in weight, dimensions, rigidity, etc. due to the scattering that occurs in the respective manufacturing processes. The uniformity of weight is referred to as balance. The condition in which balance is not achieved is called unbalance, and there is static unbalance and dynamic unbalance. Static unbalance refers to the non-uniformity of weight distribution that exists in the circumferential direction in the still condition and causes vibration of the car body in the vertical direction. Dynamic unbalance refers to the non-uniformity of weight distribution that exists in the rotating condition and causes vibration of the car body in the vertical and lateral directions as well as steering shimmy. The uniformity of the dimensions is referred to as "runout", and there is radial runout (referred to hereinafter as "RRO"), which is the runout in the radial direction (vertical runout), and lateral runout, which is the runout in the width direction (lateral runout). The uniformity of rigidity is referred to as "force variation", and there is radial force variation (referred to herein after as "RFO"), which is the variation of force in the radial direction, and lateral force variation, which is the variation of force in the width direction. Among these characteristics, a large unbalance and RFV in particular cause vibration of a vehicle. The unbalance and RFV must thus be lessened.

Balance in the direction around the rotation axis and in the direction of the rotation axis must thus be achieved with a tire/wheel assembly, in which a tire and a wheel are assembled together. However, if a wheel and tire are assembled together without consideration of the abovementioned static balance of the wheel and tire, unbalance in the direction around the rotation axis and in the direction of the rotation axis will occur. The condition in which the balance in the direction around the rotation axis is not achieved is static unbalance, and if static balance is not achieved, vibration in the vertical direction will occur during travel. The condition in which the balance in the direction of the rotation axis is not achieved is dynamic unbalance, and if dynamic balance is not achieved, vibration in the vertical and lateral directions will occur and cause steering shimmy, etc.

Since non-uniformity exists in the wheel alone and the tire alone as described above, in order to lessen the non-uniformity, the non-uniformity of the tire/wheel assembly, with which the wheel and tire are assembled together, is lessened as much as possible. Various methods are thus employed as methods of assembling a tire/wheel assembly. Two representative assembling methods shall be described below.

As a first method, there is the method of reducing the RFV of the tire/wheel assembly. With this method, a tire and a wheel are assembled together upon performing phase matching of the maximum point of the RFV of the tire with the minimum point of the RRO (so-called low point) of the wheel. By this assembling method, the tire/wheel assembly as a whole is made to approach a circular shape and the vibration in the vertical direction during the rotation of the tire/wheel assembly is reduced. Here, if the light point of the tire, which is the lightest part in the weight distribution in the circumferential direction of the tire, and the heavy point of the wheel, which is the heaviest part in the weight distribution in the circumferential direction of the wheel, are at mutually close positions, the static unbalance of the tire and the static unbalance of the wheel cancel each other out to lessen the static unbalance of the tire/wheel assembly as a whole. However, if assembly is performed with priority given to matching the direction of the maximum point of the RFV of the tire with the direction of the minimum point of RRO of the wheel as mentioned above, the light point of the tire and the heavy point of the wheel will normally not be matched and balance weights must be added further.

Thus in order to determine the weight and position of attachment of the balance weights after assembly, the tire/wheel assembly is set on an unbalance measuring device (referred to hereinafter as a "balancer") and the weight and position (angle) of the unbalance of the tire/wheel assembly are measured. After measurement, balance weights (lead, etc.), which correspond to the weight of the unbalance, are attached to the rim of the wheel at locations corresponding to the position of the unbalance to adjust the balance, and the measurement of unbalance and adjustment of the balance weights are repeated until the amount of unbalance becomes less than or equal to a fixed amount. In order to improve the efficiency of the balance weight attachment work, the position of attachment of the air valve, which becomes the heavy point, is used as a guideline for the attachment position of the balance weights. Balance weights are normally attached at two locations at the outer side and the inner side of the wheel.

A second method is the method of lessening the unbalance of the tire/wheel assembly. With this method, the tire and wheel are assembled together upon performing phase matching of the light point of the static unbalance of the tire and the heavy point of the static unbalance of the wheel. By this assembly, the static unbalances of both the tire and wheel cancel each other out so that the static unbalance of the tire/wheel assembly as a whole is lessened and the vibration in the vertical direction during travel can be restrained. After assembly, the RFV is improved using a tire fitter. Furthermore, if unbalance still remains in the tire/wheel assembly, the weight and position (angle) of the unbalance of the tire/wheel assembly are measured using a balancer in order to lessen the unbalance. Balance weights, corresponding to the weight of the unbalance, are then attached to the rim of the wheel at locations corresponding to the unbalance.

In particular with this method, since an air valve for supplying compressed air into the tire is attached to the rim of the wheel, the weight of this air valve is taken into account and the air valve attachment position is used as the heavy point of the wheel in many cases. Thus in this case, the light point of the static unbalance of the tire is phase matched with the air valve attachment position of the wheel.

As has been described above, with both methods, the setting of the heavy point of the static unbalance of the wheel to the air valve attachment position is effective in providing a guideline for assembly that can be judged readily. However, since the weight of an air valve is not so high, in the case where the scattering of the weight distribution is large among the respective products due to manufacturing errors of the wheel body, this scattering may override the weight of the air valve and the heavy point of the wheel as a whole may not necessarily coincide with the air valve attachment position. In relation to this problem, Japanese Unexamined Patent Publication No. 2000-170843 discloses an invention of a method for making the heavy point of the static unbalance of the wheel coincident with the air valve attachment position. With this invention, for each of the members, which comprise the air valve, for example, the air valve body, the cap that covers the air inlet of the air valve, etc., a plurality of types that differ in weight are prepared in advance and the weight of the air valve itself is adjusted by selectively attaching members with appropriate weights to forcibly make the heavy point coincide with the air valve attachment position.

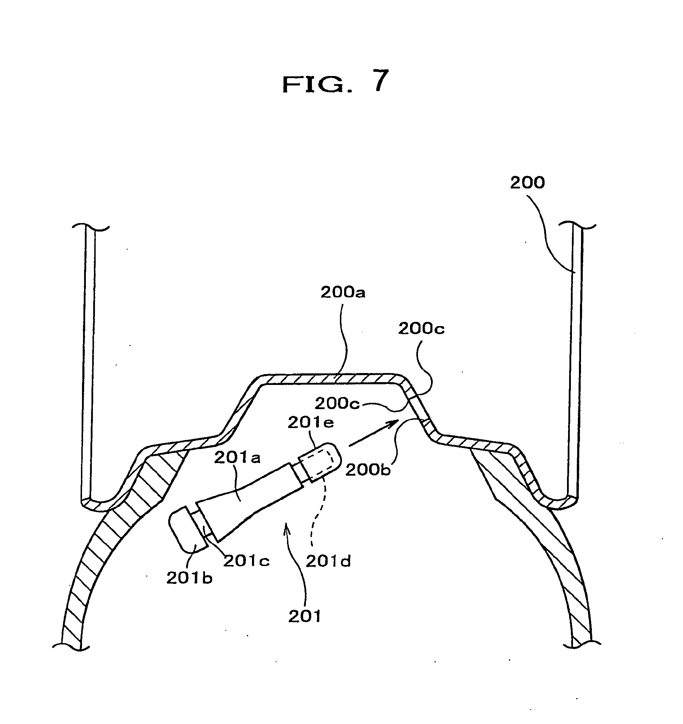

The casing structure of an air valve and the attachment of an air valve to a wheel shall now be described with reference to Fig. 7. Fig. 7 is a diagram, which shows the rim of a wheel and the casing structure of an air valve. The structure of the air path, etc. inside the air valve are omitted. In Fig. 7, the casing of air valve 201 is comprised of a substantially cylindrical stem part 201a and a grommet part 201b, which is formed across a fitting groove 201c provided along the circumferential direction at one end of stem part 201a. An air inlet 201d is formed at the other end of stem part 201a and a cap 201e is attached so as to cover this air inlet 201d. Also, the surface of air valve 201 is normally covered with a synthetic rubber material. Air valve 201 is attached to the rim 200a of a wheel 200 by insertion, by making use of the resilience force of rubber, of the stem part 201a into a circular air valve attachment hole 200b, formed in rim 200a, from the side at which the tire is fitted, fitting the fitting groove 201c to the circumferential surface of air valve attachment hole 200b, and stopping grommet part 201b onto rim 200a. The stem part 201a is thus pushed into air valve attachment hole 200b in the attachment of air valve 201, and in order to prevent cutting and flawing of the surface of air valve 201, which is comprised of synthetic rubber material, the outer and inner circumferential edge parts 200c of air valve attachment hole 200b is subject to burr removal and other forms of so-called "edge treatment" in advance, and normally, cutting of the edge is performed using a machine tool, etc. However, since wheel 200 is a large part, a wide occupied space had to be secured for the edge treatment process, and since as can be understood from Fig. 7, air valve attachment hole 200b is made within a narrow step formed on rim 200a, the cutting by a machine tool for edge treatment was difficult and required special tools and jigs.

The problems of the above-described two assembly methods shall now be described.

With the first of the above-described methods, though the RFV is lessened after assembly of the tire and wheel, since there is no correlation between the static unbalance and the RRO of the wheel, a large unbalance remains in the weight distribution of the tire/wheel assembly. Large balance weights must thus be attached to the wheel in order to lessen this unbalance. As a result the large balance weights cause the manufacturing cost to increase and the outer appearance of the tire/wheel assembly to become poor, thus causing the commercial value to drop, etc.

With the second of the above-described methods, though the unbalance is lessened after assembly of the tire and the wheel, since there is no correlation between the static unbalance and the RRO of the wheel, a large RFV remains and causes vibration during travel. This RFV must thus be lessened by use of a tire fitter, etc. Furthermore, though the balance weights to be attached will be smaller with this second method, since balance weights still have to be attached, the problem of outer appearance still remains. Especially in the case where the heavy point of the static unbalance of the wheel is set to the air valve attachment position, since the heavy point will not necessarily coincide with the air valve attachment position, an unbalance will remain in the weight distribution of the tire/wheel assembly.

A plurality of types that differ in weight must thus be prepared as mentioned above for the members that comprise the air valve in order to forcibly make the heavy point of static unbalance coincide with the air valve attachment position. In this case, there will be problems in terms of economy and control of parts, and due to the trouble of having to select members of appropriate weights for each tire/wheel assembly, there is also a problem in terms of efficiency of the balance adjustment work. It is therefore desirable to be able to make the heavy point of static unbalance coincide with the air valve attachment position using just standard specification items and without having to prepare a plurality of types of air valves according to weight. It is also preferable with regard to the air valve attachment hole to enable omission or simplification of the edge treatment process.

Moreover, with the above-described two assembly methods, the weight and position of unbalance of the tire/wheel assembly must be measured using a balancer in order to attach balance weights after assembly of the tire and wheel. The balance adjustment work thus becomes a troublesome work with many processes, requires extremely many manhours, and is poor in working efficiency. It is therefore desirable for the balance weights to be as small as possible and for balance weights not to be attached where possible, and in the case where balance weights must be attached, it is desirable to be able to specify the attachment locations without having to measure the balance.

In the case of aluminum wheels, since a balance weight is attached to the inner circumferential side of the rim of a wheel, there is also the problem that the clearance between the balance weight and the brake device becomes small.

An object of this invention is therefore to resolve the above problems by providing a tire/wheel assembly assembling method, which improves the working efficiency in the assembling of a tire and a wheel and improves the outer appearance of the wheel.

### Disclosure of the Invention

This invention provides a tire/wheel assembly assembling method, which is a method of assembling a tire/wheel assembly with which a tire and a wheel are assembled together, and is comprised of a balance weight determination step, in which the weight and attachment position of a balance weight to be attached to the abovementioned wheel are determined on the assumption that the minimum point of the RRO of the abovementioned wheel will be phase matched with the maximum point of the RFV of the abovementioned tire and based on the weight and position of the heavy point of the static unbalance of the abovementioned wheel and the weight and position of the light point of the static unbalance of the abovementioned tire, a balance weight attachment step, in which a balance weight of the weight determined in the abovementioned balance weight determination step is attached to the attachment position of the abovementioned wheel that was determined in the abovementioned balance weight determination step, and an assembling step, in which the abovementioned wheel and the abovementioned tire are assembled together upon phase matching the minimum point of the RRO of the abovementioned wheel with the maximum point of the RFV of the abovementioned tire.

With this tire/wheel assembly assembling method, by phase matching of the minimum point of the RRO of the wheel and the maximum point of the RFV of the tire, the large force in the radial direction of the tire is absorbed by dimensional variations in the radial direction of the wheel. Furthermore with this method, by attachment of a balance weight to the wheel in the balance weight attachment step, the unbalance of the tire/wheel assembly is lessened. Also with this method, a balance weight can be mounted, based on the weight and position of the balance weight determined in the balance weight determination step, to the outer circumferential surface of the rim of the wheel prior to assembling the wheel and the tire together, and when the balance weight is attached at such a position, the balance weight will be covered by the tire in the tire/wheel assembly.

A tire/wheel assembly assembling line, which is an assembling line for a tire/wheel assembly, with which a tire and wheel are assembled together, may work according to a method that is comprised of a wheel marking process, in which the minimum point of the RRO of the abovementioned wheel is marked, a tire marking process, in which the maximum point of the RFV of the abovementioned tire is marked, a balance weight determination process, in which the weight and attachment position of a balance weight to be attached to the abovementioned wheel are determined on the assumption that the minimum point of the RRO of the abovementioned wheel will be phase matched with the maximum point of the RFV of the abovementioned tire and based on the weight and position of the heavy point of the static unbalance of the abovementioned wheel and the weight and position of the light point of the static unbalance of the abovementioned tire, a balance weight attachment process, in which a balance weight of the weight determined in the abovementioned balance weight determination process is attached to the attachment position of the abovementioned wheel that was determined in the abovementioned balance weight determination process, and an assembling process, in which the abovementioned wheel and the abovementioned tire are assembled together upon phase matching the abovementioned marked position of the wheel with the abovementioned marked position of the tire.

With this tire/wheel assembly assembling line, by phase matching of the minimum point of the RRO of the wheel with the maximum point of the RFV of the tire in the assembling process, the RFV of the tire/wheel assembly is lessened. Furthermore with this assembling line, by attachment of a balance weight to the wheel in the balance weight attachment process, the unbalance of the tire/wheel assembly is lessened, and the unbalance measurement process and balance weight attachment process subsequent assembly are eliminated. Also with this assembling line, since a balance weight can be mounted, based on the weight and position of the balance weight determined in the balance weight determination process, to the wheel in the balance weight attachment process prior to the assembling process, the balance weight can be mounted at the outer circumferential surface of the rim of the wheel, which becomes covered by the tire after the assembling process.

Phase matching refers to the matching of the direction of a predetermined point along the circumferential direction of the tire with the direction of a predetermined point in the circumferential direction of the wheel with the centers of the tire and the wheel being matched.

### BRIEF DESCRIPTION OF THE DRAWINGS

Fig. 1 shows a wheel and a tire, related to an embodiment of this invention, in the condition prior to assembly, with Fig. 1A being a front view of the wheel and Fig. 1B being a front view of the tire.
Fig. 2 is a front view, which shows the condition where the wheel and tire have been phase matched for explaining the balance weight determination step of an embodiment of this invention.
Fig. 3 shows a side view and a front view of the wheel to which a balance weight has been attached prior to assembly according to an embodiment of this invention.
Fig. 4 is a perspective view of the tire/wheel assembly related to an embodiment of this invention.
Fig. 5 is a flowchart of the tire/wheel assembly assembling method of an embodiment of this invention.
Fig. 6 is a block diagram of the tire/wheel assembly assembling line of an embodiment of this invention.
Fig. 7 is a partial sectional view of a rim for explaining the air valve attachment structure of the prior art.

### PREFERRED EMBODIMENT OF THE INVENTION

An embodiment of the tire/wheel assembly assembling method according to this invention shall now be described with reference to the drawings.

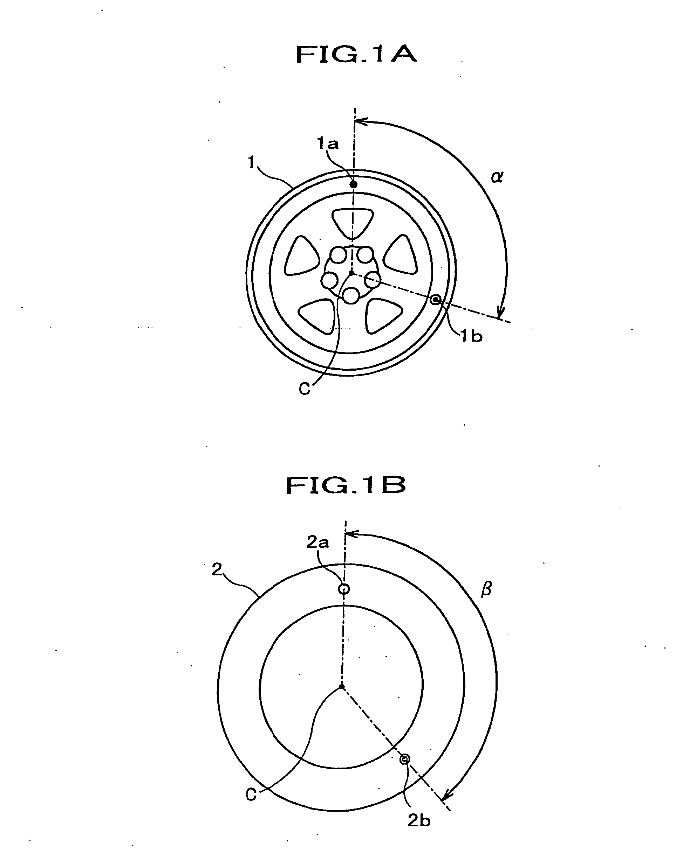

An embodiment of a tire/wheel assembly assembling method and a tire/wheel assembly assembling line shall be described with reference to Fig. 1 through Fig. 6.

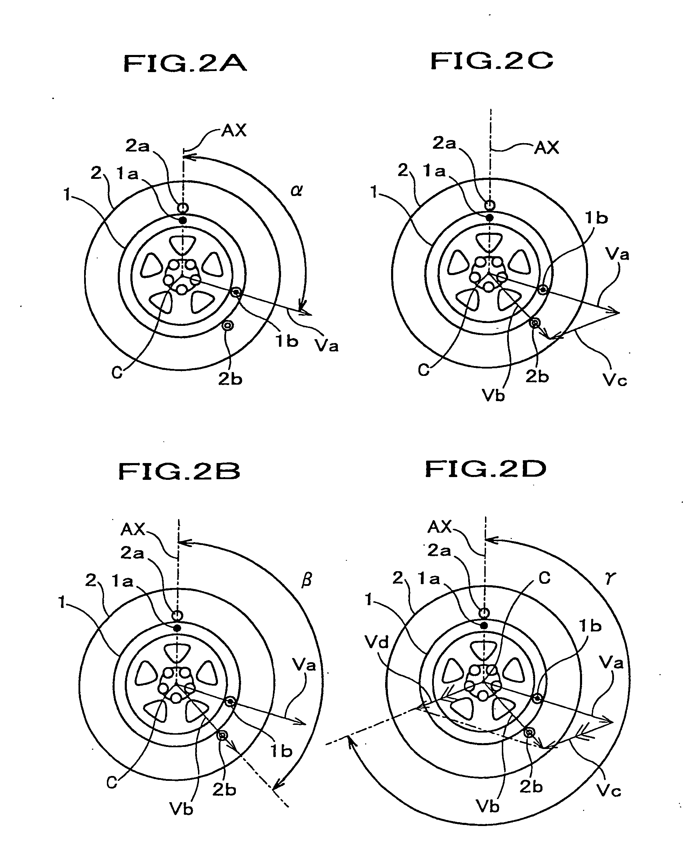

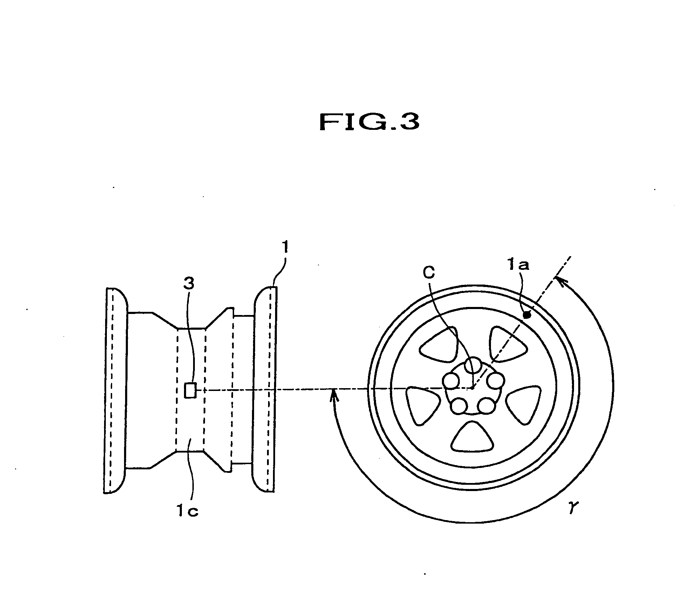

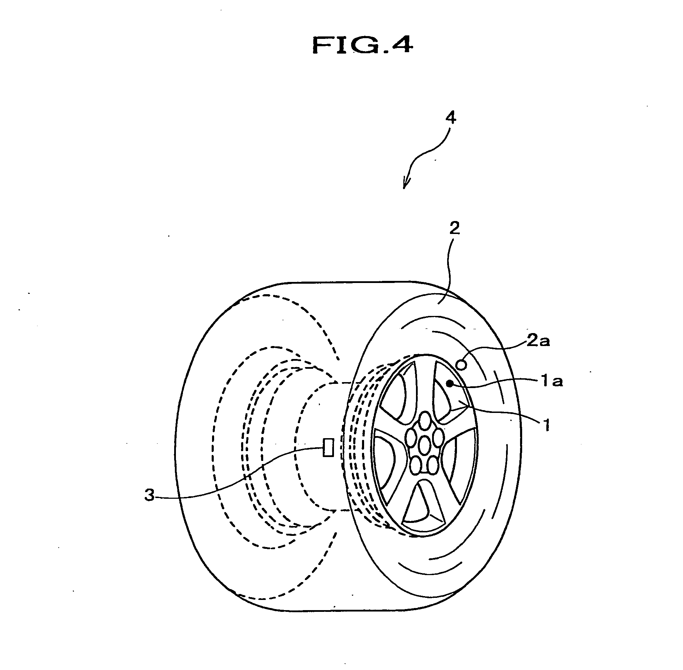

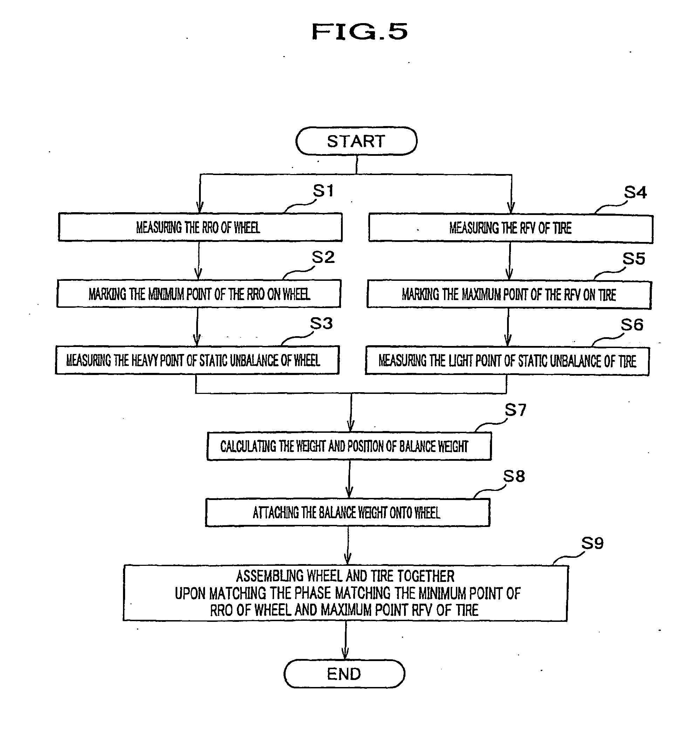

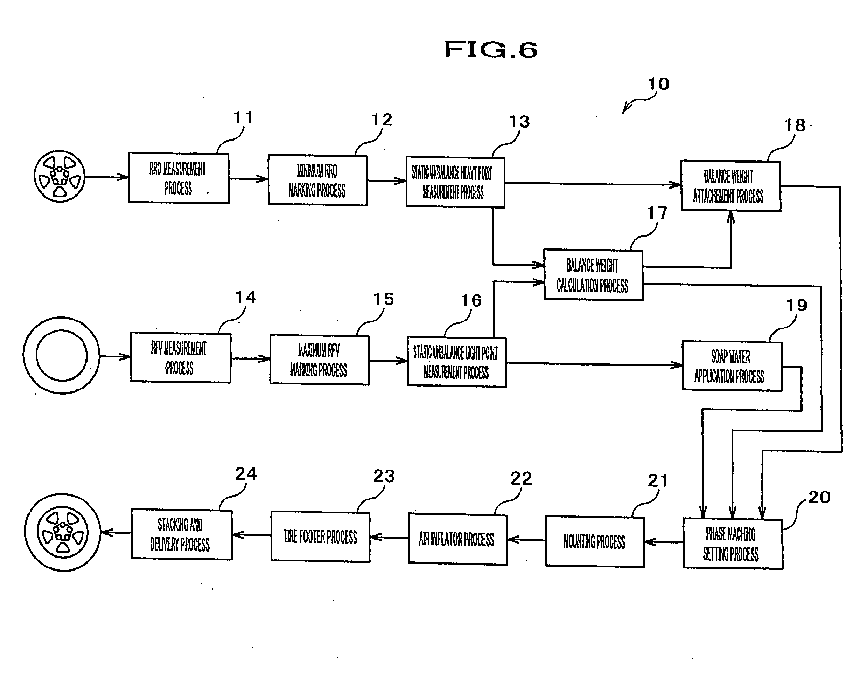

Fig. 1 shows a wheel and a tire prior to assembly, with Fig. 1A being a front view of the wheel and Fig. 1B being a front view of the tire. Fig. 2 is a front view, which shows the condition where the wheel and tire have been phase matched for explaining the balance weight determination step. Fig. 3 shows a side view and a front view of the wheel to which a balance weight has been attached prior to assembly. Fig. 4 is a perspective view of the tire/wheel assembly. Fig. 5 is a flowchart of the tire/wheel assembly assembling method. Fig. 6 is a block diagram of the tire/wheel assembly assembling line.

With the tire/wheel assembly assembling method of this embodiment, the weight and attachment position of a balance weight are determined prior to assembling the wheel and tire together and the balance weight is attached to the wheel prior to assembly in order to lessen the unbalance of the tire/wheel assembly. Furthermore with this assembly method, the wheel and tire are assembled together upon performing phase matching of the minimum point of the RRO of the wheel and the maximum point of the RFV of the tire in order to lessen the RFV of the tire/wheel assembly. With this assembly method, since the balance weight can be attached to the outer circumferential surface of the rim of the wheel prior to assembling the wheel and tire together, the appearance quality of the tire/wheel assembly will be improved. The tire/wheel assembly assembling line of Embodiment 1 is an assembling line that has been arranged based on the assembling method of this embodiment.

The heavy point of the static unbalance of a wheel is the point that is indicated as being a heavy part in the weight distribution of the wheel when the wheel is measured by a wheel balancer in the still condition. The light point of the static unbalance of a wheel is the point that is indicated as being a light part in the weight distribution of the wheel when the wheel is measured by a wheel balancer in the still condition.

With this embodiment, the inner sides of the wheel and the tire are the sides, in the direction of the widths of the wheel and tire, of attachment to a vehicle. The outer sides of the wheel and tire are the sides, in the direction of the widths of the wheel and tire, at which the tire and wheel are not attached to a vehicle.

The method assembling a tire/wheel assembly shall now be described in line with the flowchart of Fig. 5 and with reference to Fig. 1 and Fig 2.

Prior to assembling the wheel 1 and tire 2, wheel 1 is subject alone to pretreatment. That is, a wheel is manufactured by a die cast device using steel, aluminum, etc. as raw materials. The wheel 1 that is manufactured by this method will have non-uniformity of weight, dimensions, etc. even when manufactured at high precision.

With wheel 1, the position of the minimum point of the RRO is marked in order to perform phase matching with the maximum point of the RFV of tire 2. The radial direction (vertical direction) runout along the outer circumferential surface of the rim of wheel 1 are thus measured using an RRO measuring device (not shown) (S1). The point (minimum point) at which the radial direction runout is the smallest within a single rotation of wheel 1 is thus specified. In other words, the minimum point of the RRO of wheel 1 is the point of wheel 1 at which the radius is the shortest. A phase matching seal 1a is then adhered onto this specified minimum point of wheel 1 (S2). The color of phase matching seal 1a may be the same as or may differ from the color of a phase matching seal 2a to be adhered onto tire 2.

Furthermore, in order to calculate the weight and attachment position (angle) of a balance weight 3, wheel 1 is subject to the measurement of the weight and position (angle) of the heavy point of static unbalance. The weight of the static unbalance is thus measured across a single rotation of wheel 1 using a wheel balancer (not shown), and the greatest weight and the point 1b at which this weight is indicated are specified (S3). The position of the heavy point of static unbalance of wheel 1 is defined by a clockwise angle α from the minimum point of RRO of wheel 1.

Meanwhile, tire 2 is also subject to pretreatment prior to the assembling together of wheel 1 and tire 2. This pretreatment performed on tire 2 is performed in parallel to the pretreatment performed on wheel 1. Though a tire has a simple, donut-like shape, it is a composite material product comprised of textile, steel wire, rubber, etc., and a large portion is formed by hand. A tire thus has non-uniformity of weight, dimensions, rigidity, etc.

In order to perform phase matching with the minimum point of the RRO of wheel 1, the position of the maximum point of the RFV of tire 2 is marked. The radial direction force is thus measured along the outer circumferential surface of tire 2 using an RFV measuring device (not shown) (S4). The point (maximum point) at which the radial direction force is the greatest within a single rotation of tire 2 is thus specified. In other words, the maximum point of the RFV of tire 2 is the point of tire 2 at which the radial direction force is the greatest. A phase matching seal 2a is then adhered onto this specified maximum point of tire 2 (S5).

Furthermore, in order to calculate the weight and attachment position (angle) of balance weight 3, tire 2 is subject to the measurement of the weight and position (angle) of the light point of static unbalance. The weight of the static unbalance is thus measured across a single rotation of tire 2 using a tire balancer (not shown), and the lightest weight and the point 2b at which this weight is indicated are specified (S6). The position of the light point of static unbalance of tire 2 is defined by a clockwise angle β from the maximum point of RFV of tire 2.

The weight and position (angle) of attachment to wheel 1 of the balance weight 3 to be attached to wheel 1 is then calculated (S7) . This calculation method shall now be described with reference to Fig. 2. With the assembling method of Embodiment 1, wheel 1 and tire 2 are assembled together upon phase matching the minimum point of RRO of wheel 1 with the maximum point of RFV of tire 2. Thus the calculation of the weight and attachment position of balance weight 3 is premised on the attachment of balance weight 3 onto a tire/wheel assembly 4, with which the minimum point of RRO of wheel 1 and the maximum point of RFV of tire 2 are phase matched. That is, calculation is performed on the assumption of the condition where the positions of phase matching seal 1a and phase matching seal 2a have been matched and by setting the fundamental axis AX (0°) to the straight line that joins the center C of tire/wheel assembly 4, the minimum point of RRO of wheel 1 , and the maximum point of RFV of tire 2.

First a vector Va of a direction, corresponding to the position of the heavy point of wheel 1, and a length, corresponding to the weight of the heavy point of wheel 1, is drawn with center C as the origin (see Fig. 2A). Since the position of the heavy point of wheel 1 is defined by the clockwise angle α from the minimum point of RRO of wheel 1, the direction of a vector Va will be the direction of clockwise angle α from the fundamental axis AX.

Next, a vector Vb of a direction, corresponding to the position of the light point of tire 2, and a length, corresponding to the weight of the light point of tire 2, is drawn with center C as the origin (see Fig. 2B). Since the position of the light point of tire 2 is defined by the clockwise angle β from the maximum point of RFV of tire 2, the direction of a vector Vb will be the direction of the clockwise angle β from the fundamental axis AX.

A vector Vc is then drawn from the endpoint of a vector Va to the endpoint of a vector Vb (see Fig. 2C).

Lastly, a vector Vd of a direction and length that are the same as those of a vector Vc is drawn with center C as the origin (see Fig. 2D). That is, the vector Vd, which is parallel to a vector Vc, is drawn with center C as the origin. The weight corresponding to the length of this vector Vd is then calculated and this weight is set as the weight of balance weight 3 to be attached to wheel 1. Also, the clockwise angle γ from fundamental axis AX, which corresponds to the direction of a vector Vd, is used to define the attachment position of balance weight 3 to be attached to wheel 1. With wheel 1, balance weight 3 is attached to the outer circumferential surface 1c of the rim at a position of clockwise angle γ from the minimum point of RRO of wheel 1 (see Fig. 3).

Balance weight 3 is then attached to wheel 1 in order to lessen the unbalance of tire/wheel assembly 4 (S8). Balance weight 3 is attached, based on the weight and attachment position of balance weight 3 determined by calculation, to the outer circumferential surface 1c of the rim of wheel 1 prior to assembling wheel 1 and tire 2 together. That is, in the attachment of balance weight 3, balance weight 3 of the weight determined by calculation is attached to the center in the width direction of outer circumferential surface 1c of the rim of wheel 1 at the position of clockwise angle γ from the minimum point of RRO of wheel 1 (see Fig. 3).

Since the outer circumferential surface 1c of the rim of wheel 1 will be covered by tire 2 when tire 2 is assembled onto wheel 1, outer circumferential surface 1c is a surface that cannot be seen from the exterior of tire/wheel assembly 4. Thus when tire 2 is assembled onto wheel 1 to which balance weight 3 is attached, balance weight 3 cannot be viewed from the exterior of tire/wheel assembly 4. Furthermore, since balance weight 3 can be attached to the center in the width direction of outer circumferential surface 1c of the rim of wheel 1, there is no need to attach balance weights at two locations at the inner side and outer side of the wheel as in the prior art. That is, the unbalance of tire/wheel assembly 4 can be lessened by attaching balance weight 3, which has been averaged for the inner and outer sides, just at one location at the center in the width direction of outer circumferential surface 1c of the rim of wheel 1. Also, even in the case where wheel 1 is an aluminum wheel, since balance weight 3 is attached to the outer circumferential surface 1c of the rim of wheel 1, there is no need to attach a balance weight onto the inner circumferential surface of the rim of- the wheel as in the prior art. Thus with tire/wheel assembly 4, the clearance between the brake device will not be made small by balance weight 3.

Next, in order to lessen the RFV of tire/wheel assembly 4, wheel 1 and tire 2 are assembled together upon matching the positions of phase matching seal 1a of wheel 1 and phase matching seal 2a of tire 2 (S9) . The assembled tire/wheel assembly 4 will thus be in the condition where the phases of the minimum point of the radial direction runout of wheel 1 and the maximum point of the variation of the radial direction force of tire 2 are matched. Since the large radial direction force of tire 2 alone will thus be absorbed by the indented portion in the radial direction of wheel 1 alone, the RFV of tire/wheel assembly 4 will be lessened.

When wheel 1 and tire 2 are assembled together, the static unbalance of tire/wheel assembly as a whole will be lessened by balance weight 3. This is because the weight and attachment position of balance weight 3 were determined, based on the heavy point of wheel 1 and the light point of tire 2, as the optimal weight and attachment position for canceling out the static unbalance of wheel 1 alone and the static unbalance of tire 2 alone. Thus when wheel 1 and tire 2 are assembled together, the non-uniformity of the weight distribution of tire/wheel assembly 4 is lessened by the relationship of the weight and position of the heavy point of wheel 1, the weight and position of the light point of tire 2, and the weight and position of balance weight 3.

With this method of assembling tire/wheel assembly 4, the RFV of tire/wheel assembly 4 is lessened by assembling wheel 1 and tire 2 upon phase matching the minimum point of RRO of wheel 1 with the maximum point of RFV of tire 2. Furthermore with this assembling method, by attaching balance weight 3 to the outer circumferential surface 1c of the rim of wheel 1 prior to assembly, the static unbalance of tire/wheel assembly 4 is lessened and the outer appearance of tire/wheel assembly 4 is improved. Furthermore, since the static unbalance, which is a cause of dynamic unbalance, is lessened, the dynamic unbalance of tire/wheel assembly 4 is also lessened.

The tire/wheel assembly assembling line shall now be described with reference to Fig. 6. Fig. 1 through Fig. 5 shall also be referenced where necessary. The tire/wheel assembly assembling line (shall be referred to hereinafter as "assembling line") 10 is an assembling line that has been organized based on the above-described tire/wheel assembly assembling method. With this description of assembling line 10, detailed description concerning the items described in the above description of the assembling method shall be omitted.

Assembling line 10 is comprised of a process to be performed on wheel 1 alone, a process to be performed on tire 2 alone, a process to be performed on wheel 1 and tire 2 (or tire/wheel assembly 4), and a calculation process. The process to be performed on wheel 1 alone and the process to be performed on tire 2 alone are processes that are carried out separately and are processes that are carried out prior to the process to be performed on wheel 1 and tire 2 (or tire/wheel assembly 4). The calculation process is a process that is carried out based on the data obtained in each of the process performed on wheel 1 alone and the process performed on tire 2 alone.

The process to be performed on wheel 1 alone is comprised of an RRO measurement process 11, a minimum RRO marking process 12, a static unbalance heavy point measurement process 13, and a balance weight attachment process 18.

First in RRO measurement process 11, the RRO of wheel 1 is measured using an RRO measuring device (not shown) and the position of the minimum point of RRO of wheel 1 is specified.

Then in minimum RRO marking process 12, phase matching seal 1a is adhered onto the position of the minimum point of RRO of wheel 1 that was specified in RRO measurement process 11.

Subsequently in static unbalance heavy point measurement process 13, the static unbalance of wheel 1 is measured using a wheel balancer (not shown) and the weight and the position (clockwise angle α from the minimum point of RRO) of the heavy point of static unbalance of wheel 1 are specified. Then in static unbalance heavy point measurement process 13, the specified weight and position data of the heavy point of static unbalance of wheel 1 are sent, along with an identification number (for example, the serial number, etc.) provided uniquely to wheel 1, to balance weight calculation process 17.

Then in balance weight attachment process 18, a balance weight 3 is attached to the center in the width direction of the outer circumferential surface 1c of the rim of wheel 1 based on the data on the weight and attachment position (clockwise angle γ from the minimum point of RRO) of balance weight 3, which were determined in balance weight calculation process 17. The wheel 1 to which balance weight 3 is attached is distinguished by the identification number that is unique to wheel 1. The weight and attachment position data of balance weight 3 are sent, along with the identification number unique to wheel 1, from balance weight calculation process 17.

The process to be performed on tire 2 alone is comprised of an RFV measurement process 14, a maximum RFV marking process 15, a static unbalance light point measurement process 16, and a soap water application process 19.

First in RFV measurement process 14, the RFV of tire 2 is measured using an RFV measuring device (not shown) and the position of the maximum point of RFV of tire 2 is specified.

Then in maximum RFV marking process 15, phase matching seal 2a is adhered onto the position of the maximum point of RFV of tire 2 that was specified in RFV measurement process 14.

Subsequently in static unbalance light point measurement process 16, the static unbalance of tire 2 is measured using a tire balancer (not shown) and the weight and the position (clockwise angle β from the maximum point of RFV) of the light point of static unbalance of tire 2 are specified. Then in static unbalance light point measurement process 16, the specified weight and position data of the light point of static unbalance of tire 2 are sent, along with an identification number (for example, the serial number, etc.) provided uniquely to tire 2, to balance weight calculation process 17.

Furthermore, in soap water application process 19, a soap water is applied to the periphery of tire 2 which is fitted onto wheel 1 to make tire 2 slippery for fitting onto the rim of wheel 1.

The calculation process is comprised of the balance weight calculation process 17. In balance weight calculation process 17, a personal computer or other electronic calculator (not shown) is used. A program for calculating the weight and attachment position (angle) of balance weight 3 by the above-described calculation method is incorporated in this electronic calculator. This program is a program that calculates the weight and attachment position (clockwise angle γ with respect to the minimum point of RRO) of balance weight 3 based on the weight and position (clockwise angle α with respect to the minimum point of RRO) of the heavy point of static unbalance of wheel 1 and the weight and position (clockwise angle β with respect to the maximum point of RFV) of the light point of static unbalance of tire 2.

In balance weight calculation process 17, the program is started up on the electronic calculator, and the weight and attachment position of balance weight 3 are calculated upon input of the weight and position data of the heavy point of static unbalance of wheel 1 and the weight and position data of the light point of static unbalance of tire 2 into the electronic calculator. Then in balance weight calculation process 17, the unique identification number of wheel 1 and the unique identification number of tire 2 are controlled in a corresponded manner in order to assemble together, in a subsequent process, the wheel 1 and tire 2 on which the calculation of the weight and attachment position of balance weight 3 is based. Furthermore in balance weight calculation process 17, the calculated weight and attachment position data of balance weight 3 are sent, along with the identification number unique to wheel 1, to balance weight attachment process 18. Also in balance weight calculation process 17, the data that are put in a corresponding relationship to the identification number unique to wheel 1 and the identification number unique to tire 2 are sent to a phase matching setting process 20.

The process to be performed on wheel 1 and tire 2 (or tire/wheel assembly 4) is comprised of phase matching setting process 20, mounting process 21, air inflator process 22, tire fitter process 23, and stacking and delivery process 24.

First, in phase matching setting process 20, wheel 1 and tire 2 are respectively selected based on the data that are put in a corresponding relationship to the identification number unique to wheel 1 and the identification number unique to tire 2. Then in phase marching s-etting process 20, the positions of the phase matching seal 1a of wheel 1 and the phase matching seal 2a of tire 2 are matched and then wheel 1 and tire 2 are set in a mounting device (not shown).

Then in mounting process 21, tire 2 is fitted onto the rim of wheel 1 by means of the mounting device.

Subsequently in air inflator process 22, air is injected into tire/wheel assembly 4 by means of an air inflator (not shown).

Then in tire fitter process 23, the side face of tire 2 is hit by a tire fitter (not shown) to release the air that is trapped between the flange of the rim of wheel 1 and the outer side surface of tire 2. By thus improving the sealing property of the fitted parts of wheel land tire 2, the RFV of tire/wheel assembly 4 is lessened further. Lastly in stacking and delivery process 24, tire/wheel assembly 4 is stacked and delivered.

With this assembling line 10, since balance weight 3 is attached priorly to the outer circumferential surface 1c of the rim of wheel 1 in the balance weight attachment process 18, the outer appearance of tire/wheel assembly 4 is improved and the need for performing an unbalance measurement process and a balance weight attachment process after assembly of wheel 1 and tire 2 together is eliminated. Also with assembling line 10, the RFV of tire/wheel assembly 4 is lessened by the phase matching setting process 20, etc. and the unbalance of tire/wheel assembly 4 is also lessened by balance weight attachment process 18, etc.

Though a description of Embodiment 1 of this invention has been given above, the tire/wheel assembly assembling method and assembling line of this invention are not limited to Embodiment 1 and may be put into practice in various forms. For example, though a seal was adhered as a means of marking, the application of ink or other means may be performed instead.

With a tire/wheel assembly assembling method according to this invention, the RFV of a tire/wheel assembly is lessened in an assembling step and the unbalance of the tire/wheel assembly is lessened in a balance weight determination step and in a balance weight attachment step. Also with this assembling method, a balance weight can be attached to the outer peripheral surface of the rim of a wheel, based on the weight and position of the balance weight that were determined in the balance weight determination step prior to assembling the wheel and the tire together. A tire/wheel assembly that has been assembled by this assembling method will not be damaged in outer appearance due to the balance weight when the balance weight is attached to the outer peripheral surface of the rim.

Also, with a tire/wheel assembly assembling line according to this invention, the RFV of a tire/wheel assembly is lessened by an assembling process. Furthermore with this assembling line., the unbalance of the tire/wheel assembly is lessened and the unbalance measurement process and balance weight attachment process subsequent assembling are eliminated by a balance weight determination process and a balance weight attachment process. Also with this assembling line, since a balance weight can be attached to a wheel, based on the weight and position of the balance weight that were determined in the balance weight determination process, prior to the assembling process, the balance weight can be attached to the outer peripheral surface of the wheel, which becomes covered by the tire. As a result, a tire/wheel assembly that has been assembled by this assembling line will not be damaged in outer appearance due to the balance weight when the balance weight is attached to the outer peripheral surface of the rim.

## Claims

1. A tire/wheel assembly assembling method, which is a method of assembling a tire/wheel assembly with which a tire (2) and a wheel (1) are assembled together,
**characterized in that** said tire/wheel assembly assembling method being comprised of a balance weight determination step (17), in which the weight and attachment position of a balance weight (3) to be attached to said wheel are determined on the assumption that the minimum point of the radial runout of said wheel will be phase matched with the maximum point of the radial force variation of said tire (2) and based on the weight and position of the heavy point of the static unbalance of said wheel (1) and the weight and position of the light point of the static unbalance of said tire (2),
a balance weight attachment step (18), in which a balance weight (3) of the weight determined in said balance weight determination step (17) is attached to the attachment position of said wheel (1) that was determined in the balance weight determination step (17), and
an assembling step (21), in which said wheel (1) and said tire (2) are assembled together upon phase matching (20) the minimum point of the radial runout of said wheel (1) and the maximum point of the radial force variation of said tire (2).

## Patentansprüche

1. Reifen/Radbaugruppe-Zusammenbauverfahren, welches ein Verfahren eines Zusammenbaus einer Reifen/Radbaugruppe ist, mit welchem ein Reifen (2) und ein Rad (1) zusammengebaut werden,
**dadurch gekennzeichnet, dass** das Reifen/Radbaugruppe-Zusammenbauverfahren gebildet ist aus einem Auswuchtgewicht-Bestimmungsschritt (17), in welchem das Gewicht und die Anbringungsposition eines Auswuchtgewichts (3), welches an dem Rad anzubringen ist, bestimmt werden auf Grundlage der Annahme, dass der Minimumpunkt der radialen Unrundheit des Rades mit dem Maximumpunkt der Schwankung der radialen Kraft des Reifens (2) phasenabgeglichen werden wird, sowie auf Grundlage des Gewichts und der Position des schweren Punkts der statischen Unwucht des Rades (1) und des Gewichts und der Position des leichten Punktes der statischen Unwucht des Reifens (2),
einem Auswuchtgewicht-Anbringungsschritt (18), in welchem ein Auswuchtgewicht (3) des in dem Auswuchtgewicht-Bestimmungsschritt (17) bestimmten Gewichts an der Anbringungsposition des Rades (1), welche in dem Auswuchtgewicht-Bestimmungsschritt (17) bestimmt worden war, angebracht wird, und
einem Zusammenbauschritt (21), in welchem das Rad (1) und der Reifen (2) nach einem Phasenabgleich (20) des Minimumpunkts der radialen Unrundheit des Rades (1) und des Maximumpunkts der Schwankung der radialen Kraft des Reifens (2) zusammengebaut werden.

## Revendications

1. Procédé d'assemblage d'un ensemble pneumatique/roue, qui est un procédé consistant à assembler un ensemble pneumatique/roue avec lequel un pneumatique (2) et une roue (1) sont assemblés ensemble,
**caractérisé en ce que** ledit procédé d'assemblage d'ensemble pneumatique/roue est constitué d'une étape de détermination de poids d'équilibrage (17), dans lequel le poids et la position de fixation d'un poids d'équilibrage (3) à fixer sur ladite roue sont déterminés en supposant que le poids minimum du faux-rond radial de ladite roue sera apparié en phase avec le point maximum de la variation de force radiale dudit pneumatique (2) et sur la base du poids et de la position du point lourd du déséquilibre statique de ladite roue (1) et du poids et de la position du point léger du déséquilibre statique du type pneumatique (2),
une étape de fixation de poids d'équilibrage (18), dans lequel un poids d'équilibrage (3) ayant le poids déterminé dans ladite étape de détermination de poids d'équilibrage (17) est fixé dans la position de fixation de ladite roue (1) qui a été déterminée dans l'étape de détermination de poids d'équilibrage (17), et une étape d'assemblage (21), dans laquelle ladite roue (1) et ledit pneumatique (2) sont assemblés ensemble lors d'un appariement de phase (20) du point minimum du faux-rond radial de ladite roue (1) et du point maximum de la variation de force radiale dudit pneumatique (2).
